# EUROPÄISCHE PATENTANMELDUNG

(11) **EP 4 796 244 A1**
(43) Veröffentlichungstag der Anmeldung: **26.08.2026**
(21) Anmeldenummer: 25158873.7
(22) Anmeldetag: 19.02.2025
(51) Int. Cl.: B22C 5/04, B09B 3/80, B22C 5/08, B22C 5/18, B22C 1/18

(54) **VERFAHREN ZUR WIEDERGEWINNUNG VON ANORGANISCH GEBUNDENEM SAND**

(71) Anmelder: AAGM Aalener Gießereimaschinen GmbH, 73441 Bopfingen (DE)
(72) Erfinder: Preiß, Josef, 73441 Bopfingen (DE); Grüner-Lempart, Sabine, 85354 Freising (DE); Schäffer, Jörg, 85354 Freising (DE)
(74) Vertreter: Peterreins Schley

(57) **Zusammenfassung**

In einem ersten Aspekt betrifft die vorliegende Offenbarung ein Verfahren zur Rückgewinnung von anorganisch gebundenem Sand. Das Verfahren umfasst das Waschen des anorganisch gebundenen Sandes mit einer wasserbasierten Waschlösung, wobei die Waschlösung mindestens eine Base mit einem pKs-Wert zwischen 9 und 13 beinhaltet. Weiterhin umfasst das Verfahren das Trennen des gewaschenen Sandes von der benutzten wasserbasierten Waschlösung und das Trocknen des gewaschenen Sandes.

## Beschreibung

### Technisches Gebiet

Die vorliegende Offenbarung bezieht sich auf das Gebiet der Gießerei. Insbesondere bezieht sich die vorliegende Offenbarung auf das Gebiet der Wiedergewinnung von Gießereisanden.

### Hintergrund

In der Gießereiindustrie werden zur Herstellung von Formen und Kernen große Mengen an Gießereisanden verwendet. Diese Gießereisande werden zur Sandform- und Kernherstellung oftmals mittels anorganischer Bindemittel gebunden. Nach dem Gießen werden die Sandformen zerschlagen, um das Gußteil aus der Form zu befreien. Hierbei fallen große Mengen an Gießerei-Restsanden an. Die Gießerei-Restsande können typischerweise kaum oder gar nicht wiederverwendet werden. Ein Großteil der Gießerei-Restsande muss daher auf Deponien entsorgt werden. Dies ist sowohl aus umwelttechnischer Perspektive als auch aus wirtschaftlicher Perspektive nicht optimal.

In der Vergangenheit wurden anorganisch gebundene Gießerei-Restsande wiederverwendet, indem die zerschlagenen Sandformen zerkleinert und anschließend abermals mittels anorganischen Bindemitteln gebunden wurden. Hierbei wurde jedoch festgestellt, dass die resultierenden Sandformen erheblich verringerte mechanische Eigenschaften aufweisen im Vergleich zu Sandformen, die aus "frischem" Gießereisand hergestellt werden. Dies wurde zurückgeführt auf an der Sandkornoberfläche verbleibende Bindemittel aus dem ersten Bindungsprozess.

Daher wurde versucht das verbleibende Bindemittel thermomechanisch zu entfernen, etwa in dem der Gießereisand mechanisch agitiert und gleichzeitig beheizt wurde. Bei diesem energieintensiven Prozess wurde durch Reibung das Bindemittel von den einzelnen Sandkörnern entfernt. Dies führte jedoch auch zur Abrundung der Gießereisandkörner. Eine glatte Oberflächentopographie der Sandkörner kann sich jedoch unvorteilhaft auf die mechanische Festigkeit der resultierenden Sandform auswirken. Des Weiteren kann es zur Entstehung einer erheblichen Menge Feinanteil kommen, die ebenso wiederum zur Herabsetzung der mechanischen Festigkeit beitragen kann.

Die vorliegende Offenbarung zielt darauf ab, eines oder mehrere der Probleme des Standes der Technik zu lösen.

### Übersicht

In einem ersten Aspekt betrifft die vorliegende Offenbarung ein Verfahren zur Rückgewinnung von anorganisch gebundenem Sand. Das Verfahren umfasst das Waschen des anorganisch gebundenen Sandes mit einer wasserbasierten Waschlösung, wobei die Waschlösung mindestens eine Base mit einem pKs-Wert zwischen 9 und 13 beinhaltet. Weiterhin umfasst das Verfahren das Trennen des gewaschenen Sandes von der benutzten wasserbasierten Waschlösung und das Trocknen des gewaschenen Sandes.

In manchen Ausführungsformen ist der anorganisch gebundene Sand mit einem anorganischen Bindemittel gebunden, wobei das anorganische Bindemittel bevorzugt Silikate umfasst, besonders bevorzugt wobei das Bindemittel Wasserglas, oder ein Geopolymer umfasst, insbesondere bevorzugt Wasserglas.

In manchen Ausführungsformen besteht das anorganische Bindemittel aus Wasserglas.

In manchen Ausführungsformen weist die Waschlösung einen pH-Wert zwischen etwa 8,5 und etwa 12,5, bevorzugt zwischen 9,5 und 11,5 auf.

In manchen Ausführungsformen ist die mindestens eine Base eine zweiwertige Base, bevorzugt wobei der zweite pKs-Wert der zweiwertigen Base kleiner ist als 9, besonders bevorzugt wobei der zweite pKs-Wert zwischen 6 und 9 liegt.

In manchen Ausführungsformen ist die Base ein Salz der Kohlensäure, besonders bevorzugt wobei die Base Natriumcarbonat ist.

In machen Ausführungsformen ist die Base ein Calciumsalz, besonders bevorzugt, wobei die Base Calciumhydroxid ist.

In manchen Ausführungsformen umfasst die Base sowohl Calciumhydroxid als auch Natriumcarbonat.

In manchen Ausführungsformen beinhaltet die Waschlösung zwischen etwa 5 mmol/L bis etwa 5000 mmol/L, bevorzugt zwischen etwa 30 mmol/L bis etwa 500 mmol/L und besonders bevorzugt zwischen 70 mmol/L und 150 mmol/L der mindestens einen Base mit einem pKs-Wert zwischen 9 und 13.

In manchen Ausführungsformen umfasst der anorganisch gebundene Sand Gießereisand, bevorzugt wobei der anorganisch gebundene Sand Quarzsand umfasst.

In manchen Ausführungsformen hat der anorganisch gebundene Sand eine mittlere Korngröße zwischen etwa 20 µm bis etwa 2000 µm, bevorzugt zwischen etwa 50 µm bis etwa 1000 µm, besonders bevorzugt zwischen etwa 60 µm bis etwa 700 µm.

In manchen Ausführungsformen hat der anorganisch gebundene Sand eine Median-Korngröße zwischen etwa 80 µm bis etwa 500 µm, bevorzugt zwischen etwa 90 µm bis etwa 400 µm, besonders bevorzugt zwischen etwa 100 µm bis etwa 350 µm.

In manchen Ausführungsformen umfasst der anorganische gebundene Sand zwischen 1 Gew.-% bis etwa 10 Gew.-%, bevorzugt zwischen etwa 2 Gew.-% bis etwa 5 Gew.-% anorganischen Binders, relativ zur Gesamtmasse des anorganisch gebundenen Sandes.

In manchen Ausführungsformen umfasst die Waschlösung zwischen etwa 0.1 Gew.-% bis etwa 5 Gew.-%, bevorzugt zwischen 0.5 Gew.-% bis etwas 2 Gew.-% eines Tensides, relativ zur Gesamtmasse der Waschlösung.

In manchen Ausführungsformen umfasst das Tensid ein anionisches, zwitterionisches oder nicht-ionisches Tensid, bevorzugt ein nicht-ionisches Tensid, besonders bevorzugt ein Alkylpolyglucosid.

In manchen Ausführungsformen wird beim Schritt des Waschens der anorganisch gebundene Sand in der Waschlösung suspendiert.

In manchen Ausführungsformen bilden beim Schritt des Waschens der anorganische gebundene Sand und die Waschlösung eine Suspension, wobei in der Suspension das Gewichtsverhältnis zwischen dem anorganisch gebundenen Sand und der Waschlösung zwischen etwa 1:2 bis etwa 5:1, bevorzugt zwischen etwa 1:1 bis etwa 2,5:1 beträgt.

In manchen Ausführungsformen wird die Suspension während des Waschens agitiert, bevorzugt wobei die Suspension mithilfe eines Mischers agitiert, besonders bevorzugt mithilfe eines Pflugscharmischers.

In manchen Ausführungsformen beträgt die Temperatur der Waschlösung und/oder der Suspension zwischen etwa 10°C bis etwa 90 °C, bevorzugt etwa 40 °C bis etwa 80 °C, insbesondere bevorzugt zwischen 50 °C bis etwa 70 °C.

In manchen Ausführungsformen beträgt die Dauer des Waschschrittes zwischen etwa 5 Minuten bis etwa 120 Minuten, bevorzugt zwischen etwa 10 Minuten bis etwa 90 Minuten und besonders bevorzugt zwischen etwa 20 Minuten und 60 Minuten.

In manchen Ausführungsformen werden die Schritte des Waschens und des Trennens mindestens einmal wiederholt, bevorzugt mindestens zweimal.

### Regeneration der Waschlösung

In manchen Ausführungsformen wird nach der Trennung die benutzte Waschlösung einem Schritt der Fällung unterzogen, bevorzugt wobei der benutzten Waschlösung bei der Fällung ein Fällmittel zugesetzt wird, besonders bevorzugt wobei das Fällmittel ein Metallsalz umfasst, insbesondere ein Calciumsalz.

In manchen Ausführungsformen fallen beim Schritt der Fällung ein Überstand und ein Präzipitat an, und der Überstand wird vom Präzipitat getrennt.

In manchen Ausführungsformen wird dem Überstand Carbonat-Ionen zugeführt um eine behandelte Waschlösung zu erhalten, bevorzugt wobei die Carbonat-Ionen durch Beaufschlagen des Überstandes mit Kohlenstoffdioxid zugeführt werden.

In manchen Ausführungsformen wird der Überstand vom Präzipitat getrennt, bevorzugt durch Filtration, wobei die Trennung des Überstandes vom Präzipitat vor oder nach der Zufuhr der Carbonat-Ionen erfolgen kann, bevorzugt vor der Zufuhr der Carbonat-Ionen.

In manchen Ausführungsformen wird der pH-Wert der behandelten Waschlösung nach Zufuhr der Carbonat-Ionen eingestellt um regenerierte Waschlösung zu erhalten, bevorzugt durch die Zugabe einer Base, besonders bevorzugt durch Zugabe von Natriumhydroxid und/oder Natriumhydrogencarbonat.

In manchen Ausführungsformen wird die regenerierte Waschlösung wiederverwendet zum Waschen von anorganisch gebundenem Sand.

### Trocknung

In manchen Ausführungsformen umfasst die Trocknung des gewaschenen Sandes Zentrifugation.

### Kornvereinzelung

In manchen Ausführungsformen wird der anorganisch gebundene Sand vor dem Waschen mechanisch zerkleinert.

In manchen Ausführungsformen wird der anorganisch gebundene Sand vor dem Waschen einer Kornvereinzelung unterzogen, insbesondere einer mechanischen Kornvereinzelung.

In manchen Ausführungsformen wird der anorganisch gebundene Sand vor der Kornvereinzelung einer Wässerung unterzogen.

In manchen Ausführungsformen wird der anorganische gebundene Sand während der Wässerung mechanisch agitiert, insbesondere wobei der anorganisch gebundene Sand während der Wässerung kornvereinzelt wird.

In manchen Ausführungsformen wird dem anorganisch gebunden Sand ein Tensid bei der Wässerung zugegeben.

In manchen Ausführungsformen wird der anorganische gebundene Sand vor der Wässerung zerkleinert, bevorzugt mithilfe eines Brechers oder Knollenzerkleinerers.

In manchen Ausführungsformen liegt der anorganisch gebundene Sand vor der Wässerung in der Form von Agglomeraten mit einem Maximaldurchmesser vom 10 cm, bevorzugt maximal 7 cm vor.

In manchen Ausführungsformen erfolgt die Wässerung für etwa 5 h bis etwa 4 Wochen und/oder wobei die Wässerung bei einer Temperatur zwischen 15 °C bis etwas 40 °C.

In einem zweiten Aspekt, betrifft die vorliegende Offenbarung eine Anlage zur Durchführung des Verfahrens nach einem der vorhergehenden Ausführungsformen.

### Kurzbeschreibung der Figuren

**Figur 1** zeigt die Ergebnisse des Experimentes zur Ermittlung des Einflusses der Temperatur auf die Bindemittelmobilisierung
**Figur 2** zeigt die Ergebnisse des Experimentes zur Festigkeit des regenerierten H32 Sandes
**Figur 3** zeigt die Ergebnisse des Experimentes zur Festigkeit des regenerierten F34 Sandes

### Detaillierte Beschreibung

Nachfolgend wird die vorliegende Offenbarung im Detail beschrieben. Die in der Beschreibung und den Aspekten der vorliegenden Offenbarung verwendeten Begriffe oder Wörter sind nicht so auszulegen, dass sie nur die Bedeutung des allgemeinen Sprachgebrauchs oder eines Wörterbuchs haben, sondern sollten, sofern sie in der folgenden Beschreibung nicht ausdrücklich anders definiert sind, so ausgelegt werden, dass sie ihre gewöhnliche technische Bedeutung haben, wie sie auf dem betreffenden technischen Gebiet üblich ist. In der detaillierten Beschreibung wird zur besseren Veranschaulichung der vorliegenden Offenbarung auf bestimmte Ausführungsformen Bezug genommen, wobei jedoch davon auszugehen ist, dass die vorliegende Offenbarung nicht auf diese spezifischen Ausführungsformen beschränkt ist.

Die vorliegende Offenbarung betrifft ein Verfahren zur Aufbereitung von anorganisch gebundenem Gießereisand, sodass dieser anschließend wieder für die Herstellung von Sandformen und/oder Kernen genutzt werden kann.

In der Vergangenheit wurden anorganisch gebundene Gießerei-Restsande wiederverwendet, in dem zerschlagene Sandformen zerkleinert und anschließend abermals mittels anorganischen Bindemitteln gebunden wurden. Hierbei wurde jedoch festgestellt, dass die resultierende Sandform erheblich verringerte mechanische Eigenschaften aufweist, im Vergleich zu Sandformen die aus "frischem" Gießereisand hergestellt werden, was wiederum auf das verbleibende Bindemittel zurückgeführt wurde.

Daher wurde versucht das verbleibende Bindemittel thermomechanisch zu entfernen, etwa in dem der Gießereisand mechanisch agitiert und gleichzeitig beheizt wurde. Bei diesem energieintensiven Prozess wurde durch Reibung das Bindemitteln von den einzelnen Sandkörnern entfernt. Dies führte jedoch auch zur Abrundung der Gießereisandkörner. Eine glatte Oberflächentopographie der Sandkörner kann sich jedoch unvorteilhaft auf die mechanische Festigkeit der resultierenden Sandform auswirken. Daher konnte nur ein Anteil des thermomechanisch gereinigten Sandes wiederverwendet werden, wodurch weiterhin etwa 30% des Gießereisandes nach jedem Gussverfahren entsorgt werden mussten. Weiterhin kann der Oberflächenabrieb zur Entstehung eines Feinanteils führen, der vom Gießereisand vor der erneuten Formherstellung aufwendig getrennt, und anschließend kostenintensiv deponiert werden muss.

Überraschenderweise wurde festgestellt, dass mithilfe eines Nassaufbereitungsverfahrens unter Verwendung einer starken Base, anorganisch gebundener Sand nahezu vollständig von Bindemitteln befreit werden kann und gleichzeitig eine raue Oberflächenstruktur der Sandkörner beibehalten werden kann.

In einem ersten Aspekt betrifft die vorliegende Offenbarung daher ein Verfahren zur Rückgewinnung von anorganisch gebundenem Sand. Das Verfahren umfasst das Waschen des anorganisch gebundenen Sandes mit einer wasserbasierten Waschlösung, wobei die Waschlösung mindestens eine Base mit einem pKs-Wert zwischen 9 und 13 beinhaltet. Weiterhin umfasst das Verfahren das Trennen des gewaschenen Sandes von der benutzten wasserbasierten Waschlösung und das Trocknen des gewaschenen Sandes.

In manchen Ausführungsformen weist die Waschlösung einen pH-Wert zwischen etwa 8,5 und etwa 12,5, bevorzugt zwischen 9,5 und 11,5 auf. Es wurde überraschend festgestellt, dass für eine effektive Entfernung des Bindemittels keine sehr starken Basen oder sehr hohe pH-Werte notwendig sind. Die Verwendung von starken Basen statt sehr starker Basen, bzw. die Verwendung von Waschlösung mit einem pH-Wert in den oben genannten Bereichen hat hierbei Prozessvorteile. Zum einen wird Korrosion an Bauteilen der verwendeten Anlagen verringert, zum anderen wird die Arbeitssicherheit erhöht, da ein Kontakt von Personal zu sehr starken Basen oder Lösungen mit sehr hohen pH-Werten ausgeschlossen werden kann. Weiterhin kann es beim Einsatz von sehr starken Basen zur Oberflächenkorrosion der Sandkörner kommen, was wiederum der Wiederverwendbarkeit des Sandes entgegenstehen kann.

Als besonders vorteilhaft hat es sich erwiesen, zweiwertige Basen zu verwenden. In manchen Ausführungsformen ist die mindestens eine Base daher eine zweiwertige Base, bevorzugt wobei der zweite pKs-Wert der zweiwertigen Base kleiner ist als 9, besonders bevorzugt wobei der zweite pKs-Wert zwischen 6 und 9 liegt. Die Verwendung einer zweiwertigen Base führt zur Bildung eines Puffersystems in der Waschlösung. Das Puffersystem stabilisiert den pH-Wert der Lösung. Beim Waschen des Sandes kann der pH-Wert der Waschlösung beispielsweise durch die Absorption von Kohlenstoffdioxid aus der Umgebungsluft absinken. Dies wieder könnte die Effektivität des Waschens verringern. Die Verwendung einer zweiwertigen Base kann daher zu einem stabileren pH-Wert und einer damit einhergehenden besseren Kontrollierbarkeit und Konstanz des Waschschrittes führen.

Weiterhin wurde festgestellt, dass das Verfahren effizient mithilfe der starken Base bei relativ niedrigen Temperaturen durchgeführt werden kann. In manchen Ausführungsformen beträgt die Temperatur der Waschlösung und/oder der Suspension zwischen etwa 10°C bis etwa 90 °C, bevorzugt zwischen etwa 40 °C bis etwa 80 °C, besonders bevorzugt zwischen 60 °C bis etwa 70 °C. Niedrigere Temperaturen der Waschlösung erfordern einen geringen Heizbedarf, was wiederum wirtschaftlicher als auch umweltschonender ist. Es hat sich jedoch gezeigt, dass bei Raumtemperatur die Mobilisierung des Bindemittels, insbesondere der Kieselsäure, signifikant geringer sein kann als bei Temperaturen ab 40°C. Gleichzeitig hat sich gezeigt, dass der Anstieg der Kieselsäuremobilisierung bei hohen Temperaturen nicht mehr signifikant zunimmt.

In manchen Ausführungsformen ist die Base ein Salz der Kohlensäure, besonders bevorzugt wobei die Base Natriumcarbonat ist. Das Verwenden eines Salzes der Kohlensäure erlaubt die Regeneration der Waschlösung durch Beaufschlagung mit Kohlendioxid, wie nachfolgend noch detaillierter dargestellt wird. In machen Ausführungsformen ist die Base ein Calciumsalz, besonders bevorzugt, wobei die Base Calciumhydroxid ist. Calciumhydroxid kann auch als Fällmittel benutzt werden, wie nachfolgend noch ausführlicher erläutert wird. Beim Einsatz von Calciumhydroxid als Base, erfolgt die Fällung während des Waschvorganges, was die Prozess effizienter machen kann. In manchen Ausführungsformen umfasst die Base sowohl Calciumhydroxid als auch Natriumcarbonat.

In manchen Ausführungsformen beinhaltet die Waschlösung zwischen etwa 5 mmol/L bis etwa 5000 mmol/L, bevorzugt zwischen etwa 30 mmol/L bis etwa 500 mmol/L und besonders bevorzugt zwischen 70 mmol/L und 150 mmol/L der mindestens einen Base mit einem pKs-Wert zwischen 9 und 13.

In manchen Ausführungsformen ist der anorganisch gebundene Sand mit einem anorganischen Bindemittel gebunden, wobei das anorganische Bindemittel bevorzugt Silikate umfasst, besonders bevorzugt wobei das Bindemittel Wasserglas, oder ein Geopolymer umfasst, insbesondere bevorzugt Wasserglas. In manchen Ausführungsformen besteht das anorganische Bindemittel aus Wasserglas oder ist Wasserglas basiert.

In manchen Ausführungsformen umfasst der anorganisch gebundene Sand Gießereisand, bevorzugt wobei der anorganisch gebundene Sand Quarzsand umfasst. Der anorganisch gebundene Sand kann Natursand und/oder künstlichen Sand umfassen.

In manchen Ausführungsformen hat der anorganisch gebundene Sand eine mittlere Korngröße zwischen etwa 20 µm bis etwa 2000 µm, bevorzugt zwischen etwa 50 µm bis etwa 1000 µm, besonders bevorzugt zwischen etwa 60 µm bis etwa 700 µm. In manchen Ausführungsformen hat der anorganisch gebundene Sand eine Median-Korngröße zwischen etwa 80 µm bis etwa 500 µm, bevorzugt zwischen etwa 90 µm bis etwa 400 µm, besonders bevorzugt zwischen etwa 100 µm bis etwa 350 µm. Die mittlere Korngröße und Median-Korngröße kann mittels Siebanalyse bestimmte werden, beispielsweise unter Verwendung einer Vibrationssiebmaschine EML 200 digital plus der Fa. Haver & Boecker, bei einer Siebdauer von 5 Minuten und einer Amplitude von 0,3 mm. Die mittlere Korngröße und die Mediankorngröße sind nach Massenanteil zu bestimmen.

In manchen Ausführungsformen umfasst der anorganische gebundene Sand zwischen 1 Gew.-% bis etwa 10 Gew.-%, bevorzugt zwischen etwa 2 Gew.-% bis etwa 5 Gew.-% anorganischen Binders, relativ zur Gesamtmasse des anorganisch gebundenen Sandes.

In manchen Ausführungsformen umfasst die Waschlösung zwischen etwa 0.1 Gew.-% bis etwa 5 Gew.-%, bevorzugt zwischen 0.5 Gew.-% bis etwas 2 Gew.-% eines Tensides, relativ zur Gesamtmasse der Waschlösung. Der Einsatz eines Tensides kann die Effektivität des Wachprozesses weiter steigern. Es wird davon ausgegangen, dass die verbesserte Effektivität durch das Absenken der Grenzflächenspannung zwischen dem Gießereisand (bzw. den individuellen Körnern) und der Waschlösung erreicht wird. In manchen Ausführungsformen umfasst das Tensid ein anionisches, zwitterionisches oder nicht-ionisches Tensid, bevorzugt ein nicht-ionisches Tensid, besonders bevorzugt ein Alkylpolyglucosid.

In manchen Ausführungsformen wird beim Schritt des Waschens der anorganisch gebundene Sand in der Waschlösung suspendiert. Die Suspension des anorganisch gebundenen Sandes in der Waschlösung sorgt dafür, dass alle Oberflächen des Korns in Kontakt mit der Waschlösung kommen. Des Weiteren kann durch die Suspendierung des Sandes ein Konzentrationsgradient des gelösten Bindemittels im Sand vermieden, der beispielsweise beim Vorliegen des Sandes als Schüttung oder Schlamm entstehen kann. Die Suspension des Sandes kann daher die Rate und Gleichmäßigkeit der Entfernung des Bindemittels erhöhen.

Darüber hinaus kann die Suspension des Sandes den Waschprozess durch Korn-Korn Reibung verbessern, insbesondere beschleunigen. Wie zuvor bereits erwähnt, kann die Korn-Korn Reibung die Rauigkeit der Oberfläche der Sandkörner verringern, was wiederum zu einer Verringerung der mechanischen Festigkeit der daraus hergestellten Sandformen führen kann. Es hat sich gezeigt, dass bei der Nassregenerierung die unerwünschte Verringerung der Rauigkeit deutlich verringert wird, im Vergleich zu einer Trockenreinigung. Es wird davon ausgegangen, dass die Waschlösung selbst, insbesondere wenn diese ebenfalls ein Tensid umfasst, als Schmierfilm zwischen Sandkörnern die Reibwirkung verringert.

In manchen Ausführungsformen wird die Suspension während des Waschens agitiert, bevorzugt wobei die Suspension mithilfe eines Mischers agitiert, besonders bevorzugt mithilfe eines Pflugscharmischers.

Weiterhin hat sich gezeigt, dass durch das Einstellen der jeweiligen Anteile von Waschlösung zu anorganisch gebundenem Sand in der Suspension, der unerwünschte Oberflächenabrieb der Sandkörner signifikant verringert werden kann. In manchen Ausführungsformen bildet beim Schritt des Waschens der anorganische gebundene Sand und die Waschlösung eine Suspension, wobei in der Suspension das Gewichtsverhältnis zwischen dem anorganisch gebundenen Sand und der Waschlösung zwischen etwa 1:2 bis etwa 5:1, bevorzugt zwischen etwa 1:1 bis etwa 2,5:1 beträgt. Bei höheren Anteilen von anorganisch gebundenem Sand kann eine unerwünscht hohe Rate des Oberflächenabriebs auftreten, während bei einem geringeren Anteil an anorganisch gebundenem Sand die Effizienz des Waschprozesses verringert wird.

In manchen Ausführungsformen beträgt die Dauer des Waschschrittes zwischen etwa 5 Minuten bis etwa 120 Minuten, bevorzugt zwischen etwa 10 Minuten bis etwa 90 Minuten und besonders bevorzugt zwischen etwa 20 Minuten und 60 Minuten.

In manchen Ausführungsformen werden die Schritte des Waschens und des Trennens mindestens einmal wiederholt, bevorzugt mindestens zweimal. Die Wiederholung des Waschschrittes erlaubt es frische Waschlösung, oder wie hiernach gezeigt "regenerierte" Waschlösung, einzusetzen. Hierdurch wird die Konzentration des gelösten anorganischen Bindemittels, beispielsweise, Wasserglas, in der Waschlösung reduziert, was wiederum zu einer höheren Rate des Entfernens des anorganischen Bindemittels führen kann durch verschieben des chemischen Gleichgewichtes. Hierbei hat jede Wiederholung des Waschschrittes eine Dauer zwischen etwa 5 Minuten bis etwa 120 Minuten, bevorzugt zwischen etwa 10 Minuten bis etwa 90 Minuten und besonders bevorzugt zwischen etwa 20 Minuten und 60 Minuten.

In manchen Ausführungsformen umfasst der Schritt des Trennens einen Schritt der Sedimentation, bevorzugt vibrationsgestützte Sedimentation und/oder einen Schritt der Zentrifugation. Der Schritt der Trennung ist vorzugsweise derart auszulegen, dass mindestens 65 Gew.-%, bevorzugt mindestens 75 Gew.-% und besonders bevorzugt mindestens 85% Gew.-% der der Flüssigkeit (Waschlösung oder Spüllösung wie nachfolgend beschrieben) entfernt werden. Durch den Einsatz der Zentrifugation können ca. 95% der Waschlösung entfernt werden, während bei der Sedimentation, insbesondere der vibrationsgestützten Sedimentation, etwa 75 % der Waschlösung entfernt werden können. In manchen Ausführungsformen umfasst das Trennen daher vibrationsgestützte Sedimentation gefolgt von Zentrifugation.

In machen Ausführungsformen umfasst der Schritt des Trennens einen Schritt des Spülens des (zuvor anorganisch gebundenen) Sandes mit Wasser. Das Wasser zum Spülen soll Waschlösung entfernen. Das Wasser im Schritt des Spülens sollte daher einen pH-Wert zwischen 5 und 8.3 haben, bevorzugt zwischen 6 und 8, und/oder weniger als 0.05 Gew.-% eines Tensides. Der Schritt des Spülens kann mehrfach wiederholt, wobei zwischen den Spülungen mindestens 50%, bevorzugt mindestens 70%, des Wassers welches für das Spülen verwendet wurde, wieder entfernt wird. Der Schritt des Spülens sollte dabei vorzugsweise dem Schritt der Zentrifugation und/oder dem Schritt der Sedimentation vorausgehen. Das Spülen kann durch Zuführung von Wasser zur Waschlösung geschehen, wodurch eine Spüllösung entsteht. Das Verhältnis zwischen zugeführtem Wasser und Waschlösung kann zwischen 3:1 bis 20:1 liegen.

### Regeneration der Waschlösung

Wie bereits zuvor erwähnt, kann die Waschlösung (oder Spüllösung) nach dem Waschen des anorganischen Sandes regeneriert werden. In manchen Ausführungsformen wird nach der Trennung die benutzte Waschlösung einem Schritt der Fällung unterzogen, bevorzugt wobei der benutzten Waschlösung bei der Fällung ein Fällmittel zugesetzt wird, besonders bevorzugt wobei das Fällmittel ein Metallsalz umfasst, insbesondere ein Calciumsalz. Als Fällmittel hat sich insbesondere Calciumhydroxid als vorteilhaft erwiesen. Das Fällmittel kann weitere Verunreinigungen in der benutzten Waschlösung mitreißen, etwa Feinanteile des Sandes oder ggf. vorhandene Additive.

In manchen Ausführungsformen fallen beim Schritt der Fällung ein Überstand und ein Präzipitat an, und der Überstand wird vom Präzipitat getrennt.

Die Verwendung von Calciumhydroxid als Fällmittel hat sich insbesondere in der Kombination mit Natriumcarbonat als Base als vorteilhaft erwiesen. Calcium bildet mit Carbonat-Ionen Calciumcarbonat, dass in Wasser eine geringe Löslichkeit hat, bzw. schwerlöslich ist und daher eine effektive Fällung ermöglicht. Daher muss beim Einsatz von Natriumcarbonat als Base, für die Fällung nur noch Calciumhydroxid beigegeben werden. Die Hydroxid-Ionen des Calciumhydroxides erhöhen hierbei zudem den pH-Wert der Lösung. Dies erlaubt es anschließend der Lösung Kohlenstoffdioxid zuzuführen, um so wieder einen Eintrag von Carbonat-Ionen zu erlauben und die Waschlösung so wieder zu einem Puffersystem basierend auf Carbonat-Ionen zu regenerieren.

In manchen Ausführungsformen wird daher dem Überstand Carbonat-Ionen zugeführt um eine behandelte Waschlösung zu erhalten, bevorzugt wobei die Carbonat-Ionen durch Beaufschlagen des Überstandes mit Kohlenstoffdioxid zugeführt werden. In manchen Ausführungsformen wird der pH-Wert der behandelten Waschlösung nach Zufuhr der Carbonat-Ionen eingestellt um regenerierte Waschlösung zu erhalten, bevorzugt durch die Zugabe einer starken Base, besonders bevorzugt durch Zugabe von Natriumhydroxid. Der pH-Wert der Waschlösung und/oder die Konzentration der zweiwertigen Base in der regenerierten Waschlösung, sollten wieder dem der frischen Waschlösung entsprechen.

In manchen Ausführungsformen wird der Überstand vom Präzipitat getrennt, bevorzugt durch Filtration, wobei die Trennung des Überstandes vom Präzipitat vor oder nach der Zufuhr der Carbonat-Ionen erfolgen kann, bevorzugt vor der Zufuhr der Carbonat-Ionen.

In manchen Ausführungsformen wird die regenerierte Waschlösung wiederverwendet zum Waschen von anorganisch gebundenem Sand.

### Trocknung

In manchen Ausführungsformen umfasst die Trocknung des gewaschenen Sandes Zentrifugation. Die Trocknung durch Zentrifugation kann den Sand auf eine Restfeuchte von etwa 1 Gew.-% bis etwa 2 Gew.-% reduzieren.

### Kornvereinzelung

In manchen Ausführungsformen wird der anorganisch gebundene Sand vor dem Waschen mechanisch zerkleinert. Bei dieser mechanischen Zerkleinerung kann der Sand in Form von Knollen oder Agglomeraten vorliegen. Die Zerkleinerung kann die Kontaktfläche zwischen der Waschlösung und den Sandkörnern erhöhen. Weiterhin kann hierdurch der Sand besser in der Waschlösung suspendiert werden. In manchen Ausführungsformen wird der anorganisch gebundene Sand vor dem Waschen einer Kornvereinzelung unterzogen, insbesondere einer mechanischen Kornvereinzelung.

In manchen Ausführungsformen wird der anorganisch gebundene Sand vor der Kornvereinzelung einer Wässerung unterzogen. Die Wässerung kann auch als "Sumpfung" beschrieben werden. Die Wässerung vor der mechanischen Zerkleinerung kann die Adhäsion zwischen den Sandkörnern verringern und so die Effizienz der mechanischen Zerkleinerung erhöhen und den Abrieb an den Kornoberflächen verringern.

In manchen Ausführungsformen wird der anorganische gebundene Sand während der Wässerung mechanisch agitiert, insbesondere wobei der anorganisch gebundene Sand während der Wässerung kornvereinzelt wird.

In manchen Ausführungsformen wird dem anorganisch gebunden Sand ein Tensid bei der Wässerung zugegeben. Das Tensid kann die Benetzung der Kornoberfläche verbessern.

In manchen Ausführungsformen wird der anorganische gebundene Sand vor der Wässerung zerkleinert, bevorzugt mithilfe eines Brechers oder Knollenzerkleinerers. In manchen Ausführungsformen liegt der anorganisch gebundene Sand vor der Wässerung in der Form von Agglomeraten mit einem Maximaldurchmesser vom 10 cm, bevorzugt maximal 7 cm vor. In manchen Ausführungsformen erfolgt die Wässerung für etwa 5 h bis etwa 4 Wochen und/oder wobei die Wässerung bei einer Temperatur zwischen 15 °C bis etwas 40 °C. In manchen Ausführungsformen erfolgt die Wässerung für etwa 12 h bis etwa 1 Woche, bevorzugt etwa 24 h bis etwa 72 h.

In manchen Ausführungsformen, umfasst das Verfahren nach dem ersten Aspekt eine Abtrennung des Feinanteils. Die Abtrennung des Feinanteils kann hierbei nach der Kornvereinzelung, nach dem Waschen des Sandes und/oder nach der Trocknung durchgeführt werden. Die Abtrennung des Feinanteils kann mittels Sieben oder unter Verwendung eines Hydrozyklons durchgeführt werden. Die Abtrennung des Feinanteils kann derart ausgelegt sein, dass der Gewichtsanteil von Sand mit einem maximalen Korndurchmesser von 20 µm kleiner als 1%, bevorzugt kleiner als 0.1 %, relativ zur Gesamtmasse des Sandes ist.

In einem zweiten Aspekt, betrifft die vorliegende Offenbarung eine Anlage zur Durchführung des Verfahrens nach einem der vorhergehenden Ausführungsformen.

### Experimentelle Ergebnisse

Im Rahmen der Entwicklung des hier beschriebenen Verfahrens wurde umfangreiche Experimente durchgeführt, die im nachfolgenden beschrieben werden.

### 1. Probenvorbereitung

### 1.a F34 Prüfriegel

Neusand der Type Quarzsand Frechen Spezifikation F34 der Firma Quarzwerke GmbH, Frechen, Deutschland wurde zu Georg-Fischer Prüfriegeln verarbeitet. Die Georg-Fischer-Prüfriegel haben eine Abmessung von 150 mm X 22,36 mm X 22,36 mm.

Zur Herstellung der Prüfriegel wurde der F 34 Neusand zunächst mit einem Anorgit-additiv (Anorgit 9470, der Firma Hüttenes-Albertus Chemische Werke GmbH, Düsseldorf, Deutschland) vermischt und anschließend mit einem Alkaliwasserglasbinder (Cordis 9545, der Firma Hüttenes-Albertus Chemische Werke GmbH, Düsseldorf, Deutschland) vermischt. Der Gewichtsanteil des Anorgit-additivs in der finalen Mischung betrug 1,6 Gew.-% und der Gewichtsanteil des Alkaliwasserglasbinders in der finalen Mischung betrug 2,4 Gew.-%. Die Mischung wurde anschließend bei 200°C ausgehärtet.

### 1.b H32 Prüfriegel

Neusand der Type Quarzsand Haltern der Spezifikation H 32 der Firma Quarzwerke GmbH, Frechen, Deutschland wurde zu Georg-Fischer Prüfriegeln verarbeitet.

Zur Herstellung der Prüfriegel wurde der H 32 Neusand zunächst einem Anorgit-additiv (Anorgit 9470, der Firma Hüttenes-Albertus Chemische Werke GmbH, Düsseldorf, Deutschland) vermischt und anschließend mit einem Alkaliwasserglasbinder (Cordis 9545, der Firma Hüttenes-Albertus Chemische Werke GmbH, Düsseldorf, Deutschland) vermischt. Der Gewichtsanteil des Anorgit-additivs in der finalen Mischung betrug 2,2 Gew.-% und der Gewichtsanteil des Alkaliwasserglasbinders in der finalen Mischung betrug 1,2 Gew.-%. Die Mischung wurde anschließend bei 200°C ausgehärtet.

### 1.c Thermische Belastung der Prüfriegel

Die Prüfriegel wurden unterschiedlich stark thermisch belastet. Die Kategorien der thermischen Belastung lassen sich der nachstehenden Tabelle 1 entnehmen.

**Table 1 Übersicht Kennziffern für die Thermische Belastung**

| Kennziffer | Thermische Belastung |
|---|---|
| Verarbeitungsstufe I | Neusand |
| Verarbeitungsstufe II | Nur Gebunden |
| Verarbeitungsstufe III | Gebunden, thermische Belastung durch Schießvorgang |
| Verarbeitungsstufe IV | Gebunden, Thermische Belastung durch Guss |

Für die Verarbeitungsstufe IV wurden die Prüfriegel als Kerne beim Guss einer Aluminiumlegierung verwendet. Die Gusstemperatur betrug 700°C. Nach dem Erkalten des Aluminiums, wurde das Aluminium aufgesägt und der Prüfriegel entnommen.

### 1.d Zerkleinerung der Prüfriegel

Die Prüfriegel der Verarbeitungsstufen II bis IV wurden mechanisch mittels eines Hammers zerkleinert. Nach der mechanischen Zerkleinerung wurde der Sand mittels Siebung (Sieb mit Maschenweite 1 mm) kornvereinzelt.

### 1.e Waschung des Kornvereinzelten Sandes

Im Anschluss an die Zerkleinerung (vor der Waschung) der Prüfriegel wurde der Sand in einem Pflugscharmischer in einer Waschlösung suspendiert. Die Waschlösung hatte eine Konzentration von 100 mM Na₂CO₃ (Natriumcarbonat) und 1 Gew.-% Alkylpolyglucoside. Die Suspension hatte einen Gewichtsanteil von 66% Sand zu 34 % Waschlösung und wurde im Pflugscharmischer bei einer Umdrehungsgeschwindigkeit von 35 rpm suspendiert.

Wie sich der nachfolgenden Tabelle 2 entnehmen lässt, wurde ein Teil der Sande mehrfach gewaschen. Zwischen den Waschungen wurde der Waschlösung das zehnfache Volumen Wasser zur Spülung zugesetzt, wodurch eine sogenannte "Spüllösung" mit einem elftel der Konzentration an Natriumcarbonat und Alkylpolyglucosid hergestellt wurde. Der Sand verblieb hierbei in der Waschtrommel des Pflugscharmischers.

Wie sich ebenfalls der nachfolgenden Tabelle 2 entnehmen lässt, wurden Sandproben teilweise für etwa 16 Stunden in der Spüllösung belassen (gekennzeichnet "Immersion für 16 Stunden in Spüllösung"). Anschließend wurde die Spüllösung mithilfe eines Überlaufs bis auf das ursprüngliche Volumen an Waschlösung reduziert und durch Zugabe von trockenem Natriumcarbonat wieder zu einer Konzentration von 100 mM Natriumcarbonat gebracht. Auch wurden wieder Alkylpolyglucoside bis zum Erreichen eines Anteils von 1 Gew.-% Alkylpolyglucoside zugegeben.

Bei den Sandproben die als "Keine Immersion" gekennzeichnet sind, wurde die Spüllösung sofort entfernt und wieder auf eine Konzentration von 100 mM Natriumcarbonat gebracht.

Weiterhin wurde ein Teil der Sande für 16 Stunden in der Waschlösung belassen, statt in der Spüllösung. Diese Sandproben sind als "Immersion für 16 Stunden in Waschlösung" gekennzeichnet.

Im Anschluss an die letzte Waschung wurde der Sand aus der Waschtrommel entnommen und mit klarem Wasser bis zum Erreichen einer pH-Wert und Leitfähigkeitskonstanz gespült. Anschließend wurde eine Fest-/Flüssigtrennung durch Sedimentation im natürlichen Schwerefeld mit darauffolgendem dekantieren des Wasser durchgeführt. Der Sand wurde anschließend auf Pappe getrocknet.

Tabelle 2 zeigt die jeweiligen Kennziffern für die unterschiedlichen Waschvorgänge.

**Table 2 Übersicht Kennziffern für Waschungen und Immersion**

| Anzahl Waschungen | Keine Immersion | Immersion für 16 Stunden in Spüllösung | Immersion für 16 Stunden in Waschlösung |
|---|---|---|---|
| 1 Waschung | α, β | γ | γ,l |
| 2 Waschungen | δ | ε | ε,l |
| 3 Waschungen | ζ | η | η,l |
| 4 Waschungen | θ | 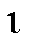 | 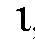 ,l |

Weiterhin wurde bei einem Teil der Sandproben der Waschlösung zusätzlich ein Tensid beigesetzt. Diese Sandproben haben neben der Kennziffer für die thermische Verarbeitungsstufe und die Immersion, noch eine Kennziffer "t" für die Gegenwart eines Tensides.

Die Kennziffern α, β unterscheiden sich dadurch, dass β als letzte Spülung, eine Spülung mit kohlensäuregesättigten Wasser auf Raumtemperatur erhielt.

Weiterhin wurde bei ein Teil der Sandproben bei der letzten Spülung eine Spülung mit einem pH-Wert von 3 verwendet. Diese Sandproben haben neben der Kennziffer für die thermische Verarbeitungsstufe und die Immersion, noch eine Kennziffer "s" für die saure Spülung.

### 2. Experiment zur Ermittlung des Einflusses der Temperatur auf die Bindemittelmobilisierung

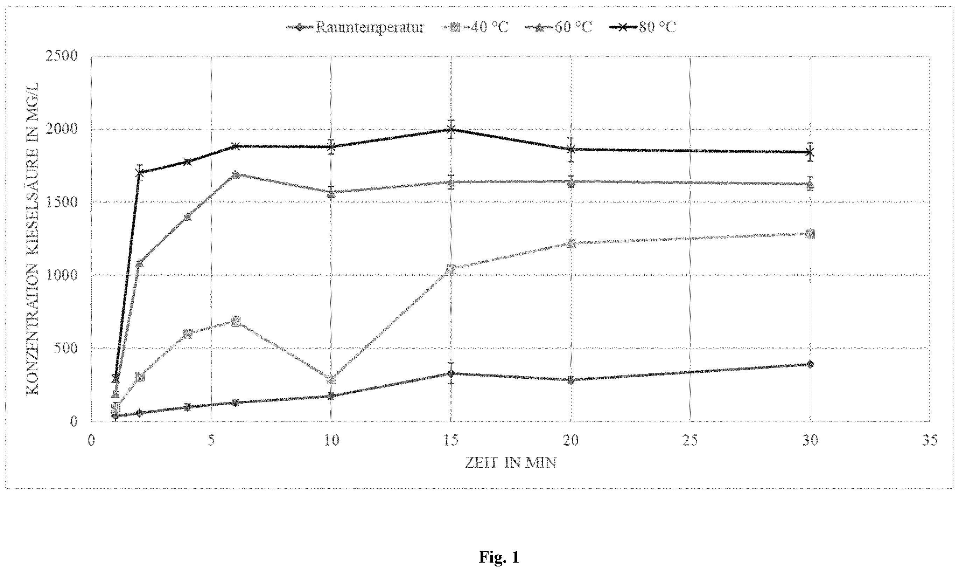

Für die Ermittlung des Einflusses der Temperatur auf die Bindemittelmobilisierung wurden Prüfriegel aus F34 Neusand der thermischen Verarbeitungsstufe III verwendet. Die Prüfriegel wurden zerkleinert unter Abschnitt 1.d beschrieben, untergingen jedoch nicht der in Abschnitt 1.e beschriebenen Waschung. Nach der Zerkleinerung wurde der Sand in einem Pflugscharmischer in einer Waschlösung suspendiert. Die Waschlösung hatte eine Konzentration von 100 mM Na₂CO₃ (Natriumcarbonat) und 1 Gew.-% Alkylpolyglucoside. Die Suspension hatte einen Gewichtsanteil von 66% Sand (150g) zu 34 % Waschlösung und wurde im Pflugscharmischer bei einer Umdrehungsgeschwindigkeit von 35 rpm suspendiert. Während des Waschvorganges wurde mehrfach der Wasserglasanteil in der Waschlösung bestimmt. Die Bestimmung erfolgte immer als dreifach Bestimmung. Die Ergebnisse sind in Fig. 1 gezeigt. Wie sich Fig. 1 entnehmen lässt, führen höhere Temperaturen zu einer schnelleren Mobilisierung des Bindemittels Kieselsäure. Des Weiteren erhöht sich die maximale Konzentration der Kieselsäure in der Waschlösung mit steigender Temperatur. Während der Anstieg von Raumtemperatur zu 40 °C signifikant ist, ist die Steigerung von 60 °C zu 80 °C im Vergleich deutlich geringer.

### 3. Experiment zur Ermittlung der Festigkeit der Prüfriegel nach erneuter Bindung des Sandes

### 3.a. Ablauf der Festigkeitsbestimmung nach erneuter Bindung des Sandes

Im Anschluss an die Regenerierung wurden mit dem regenerierten Sand wieder Georg-Fischer-Prüfriegel zur Ermittlung der mechanischen Festigkeit hergestellt.

Die Georg-Fischer-Prüfriegel wurden wieder wie in den Abschnitten "1.a F34 Prüfriegel" und "1.b H32 Prüfriegel" hergestellt, jedoch wurde statt Neusand der regenerierte Sand verwendet.

Zur Bestimmung der Biegefestigkeiten wurden die Prüfriegel in ein Georg-Fischer-Festigkeitsprüfgerät, ausgerüstet mit einer 3-Punkt-Biegevorrichtung (DISA Industrie AG, Schaffhausen, CH) eingelegt und die Kraft gemessen, welche zum Bruch der Prüfriegel führte.

Die Festigkeit wurde für alle Prüfriegel jeweils sofort nach Entnahme aus dem Formwerkzeug, 1 Stunde nach Entnahme und 24 nach Entnahme geprüft. Die Prüfung erfolgte jeweils als Dreifachbestimmung.

Ebenso wurde das Kerngewicht ermittelt, wobei hohe Kerngewichte ein Indiz für eine hohe Formqualität des Sandes ist.

### 3.b Ergebnisse der Festigkeitsbestimmung und Kerngewichte H32 Sand

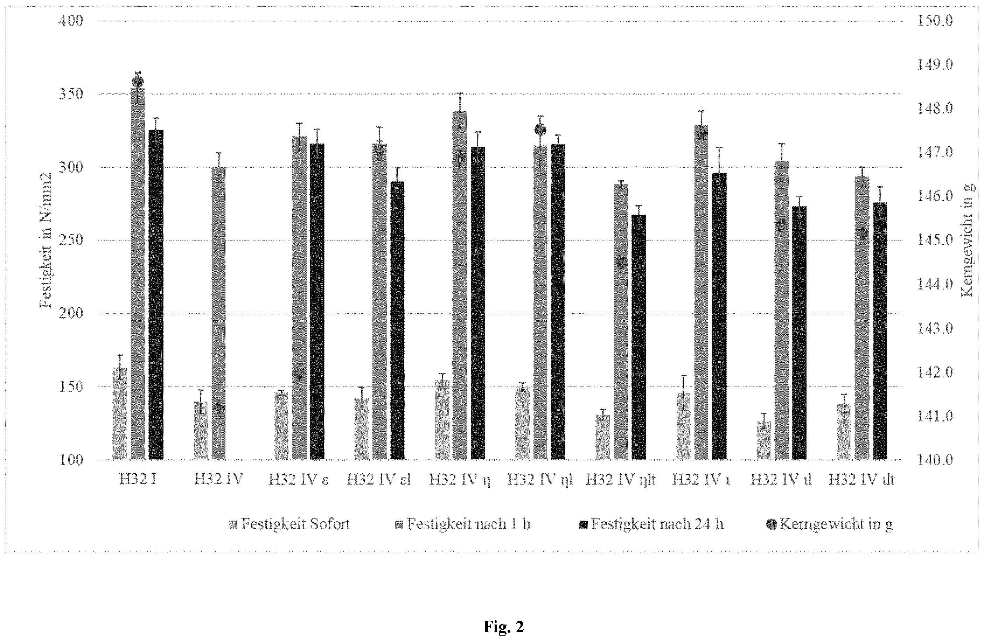

Fig.2 zeigt einen Vergleich der Festigkeit von H32 Sand verschiedener Verarbeitungsstufen und Waschungen. Wie sich der Fig.2 entnehmen lässt, erreichen die Prüfriegel, die aus nach dem hier offenbarten Verfahren regenerierten Sand hergestellt wurden eine vergleichbare Festigkeit und Kerngewichte, wie die Prüfriegel die aus Neusand hergestellt wurden. Bei den Verarbeitungsstufen II und III wurde die Festigkeit im Vergleich zu Neusand gar übertroffen.

Fig.2 zeigt weiterhin einen Vergleich der Festigkeit von H32 Neusand und regeneriertem Sand der Verarbeitungsstufe IV der nach dem hier offenbarten Verfahren regeneriert wurde. Wie sich der Fig.2 entnehmen lässt, erreichen die Prüfriegel der Verarbeitungsstufen IV teilweise wieder nahezu die Festigkeit der Prüfriegel aus Neusand.

### 3.c Ergebnisse der Festigkeitsbestimmung und Kerngewichte F34 Sand

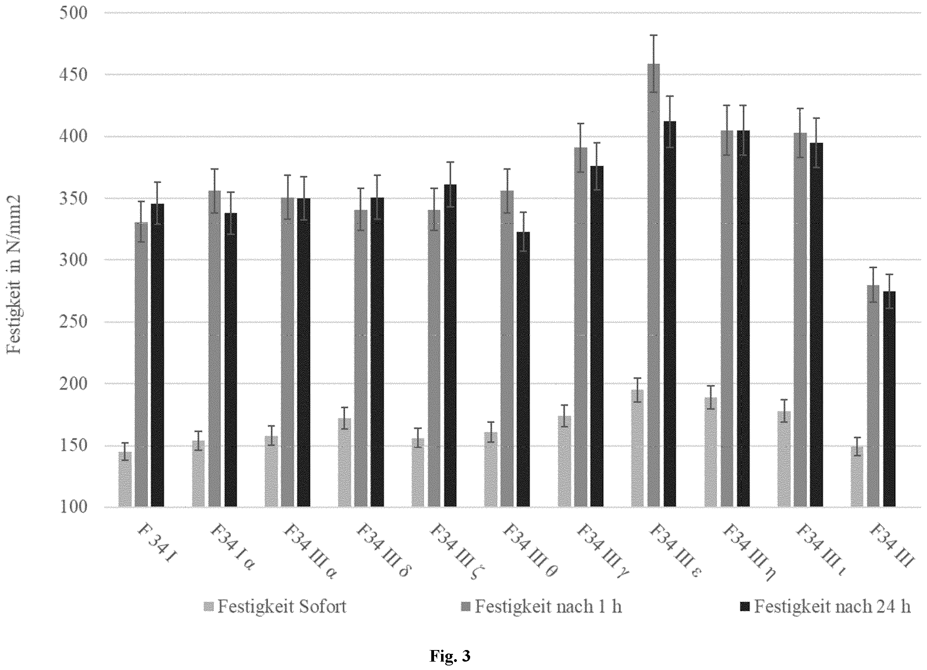

Fig.3 zeigt einen Vergleich der Festigkeit von F34 Sand verschiedener Verarbeitungsstufen und Waschungen. Wie sich der Fig.2 entnehmen lässt, erreichen die Prüfriegel, die aus nach dem hier offenbarten Verfahren regenerierten Sand hergestellt wurden, eine vergleichbare Festigkeit und Kerngewichte, wie die Prüfriegel die aus Neusand hergestellt wurden. Bei den Verarbeitungsstufe III wurde die Festigkeit im Vergleich zu Neusand gar übertroffen. Der ungewaschene Sand "F34 III" zeigt dahingegen eine deutlich verringerte Festigkeit.

Obwohl die vorliegende Erfindung in den beigefügten Ansprüchen definiert ist, kann die vorliegende Erfindung auch (alternativ) in Übereinstimmung mit den folgenden Ausführungsformen definiert werden:
1. Verfahren zur Rückgewinnung von anorganisch gebundenem Sand, wobei das Verfahren umfasst:
   - Waschen des anorganisch gebundenen Sandes mit einer wasserbasierten Waschlösung, wobei die Waschlösung mindestens eine Base mit einem pKs-Wert zwischen 9 und 13 beinhaltet;
   - Trennen des gewaschenen Sandes von der benutzten wasserbasierten Waschlösung;
   - Trocknen des gewaschenen Sandes.
2. Verfahren nach Ausführungsform 1, wobei der anorganisch gebundene Sand mit einem anorganischen Bindemittel gebunden ist, wobei das anorganische Bindemittel bevorzugt Silikate umfasst, besonders bevorzugt wobei das Bindemittel Wasserglas, oder ein Geopolymer umfasst, insbesondere bevorzugt Wasserglas.
3. Verfahren nach einer der vorhergehenden Ausführungsformen, wobei das anorganische Bindemittel aus Wasserglas besteht.
4. Verfahren nach einer der vorhergehenden Ausführungsformen, wobei die Waschlösung einen pH-Wert zwischen etwa 8,5 und etwa 12,5, bevorzugt zwischen 9,5 und 11,5 aufweist.
5. Verfahren nach einer der vorhergehenden Ausführungsformen, wobei die mindestens eine Base eine zweiwertige Base ist, bevorzugt wobei der zweite pKs-Wert der zweiwertigen Base kleiner ist als 9, besonders bevorzugt wobei der zweite pKs-Wert zwischen 6 und 9 liegt.
6. Verfahren nach einer der vorhergehenden Ausführungsformen, wobei die Base ein Salz der Kohlensäure ist, besonders bevorzugt wobei die Base Natriumcarbonat ist und oder wobei die Base ein Calciumsalz ist, besonders bevorzugt Calciumhydroxid.
7. Verfahren nach einer der vorhergehenden Ausführungsformen, wobei die Waschlösung zwischen etwa 5 mmol/L bis etwa 5000 mmol/L, bevorzugt zwischen etwa 30 mmol/L bis etwa 500 mmol/L und besonders bevorzugt zwischen 70 mmol/L und 150 mmol/L der mindestens einen Base mit einem pKs-Wert zwischen 9 und 13 beinhaltet.
8. Verfahren nach einer der vorhergehenden Ausführungsformen, wobei der anorganisch gebundene Sand Gießereisand umfasst, bevorzugt wobei der anorganisch gebundene Sand Quarzsand umfasst.
9. Verfahren nach einer der vorhergehenden Ausführungsformen, wobei der gebundene Sand eine mittlere Korngröße zwischen etwa 20 µm bis etwa 2000 µm, bevorzugt zwischen etwa 50 µm bis etwa 1000 µm, besonders bevorzugt zwischen etwa 60 µm bis etwa 700 µm hat.
10. Verfahren nach einer der vorhergehenden Ausführungsformen, wobei der gebundene Sand eine Median-Korngröße zwischen etwa 80 µm bis etwa 500 µm, bevorzugt zwischen etwa 90 µm bis etwa 400 µm, besonders bevorzugt zwischen etwa 100 µm bis etwa 350 µm hat.
11. Verfahren nach einer der vorhergehenden Ausführungsformen, wobei der anorganische gebundene Sand zwischen 1 Gew.-% bis etwa 10 Gew.-%, bevorzugt zwischen etwa 2 Gew.-% bis etwa 5 Gew.-% anorganischen Binders umfasst, relativ zur Gesamtmasse des anorganisch gebundenen Sandes.
12. Verfahren nach einer der vorhergehenden Ausführungsformen, wobei die Waschlösung zwischen etwa 0.1 Gew.-% bis etwa 5 Gew.-%, bevorzugt zwischen 0.5 Gew.-% bis etwa 2 Gew.-% eines Tensides umfasst, relativ zur Gesamtmasse der Waschlösung.
13. Verfahren nach einer der vorhergehenden Ausführungsformen, wobei das Tensid ein anionisches, zwitterionisches oder nicht-ionisches Tensid umfasst, bevorzugt ein nicht-ionisches Tensid, besonders bevorzugt ein Alkylpolyglucosid.
14. Verfahren nach einer der vorhergehenden Ausführungsformen, wobei beim Schritt des Waschens der anorganisch gebundene Sand in der Waschlösung suspendiert wird.
15. Verfahren nach einer der vorhergehenden Ausführungsformen, wobei beim Schritt des Waschens der anorganische gebundene Sand und die Waschlösung eine Suspension bilden, wobei in der Suspension das Gewichtsverhältnis zwischen dem anorganisch gebundenen Sand und der Waschlösung zwischen etwa 1:2 bis etwa 5:1, bevorzugt zwischen etwa 1:1 bis etwa 2,5:1 beträgt.
16. Verfahren nach Ausführungsform 14 oder 15, wobei die Suspension während des Waschens agitiert wird, bevorzugt wobei die Suspension mithilfe eines Mischers agitiert wird, besonders bevorzugt mithilfe eines Pflugscharmischers.
17. Verfahren nach einer der Ausführungsformen 14 bis 16, wobei die Temperatur der Waschlösung und/oder der Suspension zwischen etwa 10°C bis etwa 90 °C, bevorzugt zwischen etwa 40 °C bis etwa 80 °C, besonders bevorzugt zwischen 60 °C bis etwa 70 °C beträgt.
18. Verfahren nach einer der vorhergehenden Ausführungsformen, wobei die Dauer des Waschschrittes zwischen etwa 5 Minuten bis etwa 120 Minuten, bevorzugt zwischen etwa 10 Minuten bis etwa 90 Minuten und besonders bevorzugt zwischen etwa 20 Minuten und 60 Minuten beträgt.
19. Verfahren nach einer der vorhergehenden Ausführungsformen, wobei die Schritte des Waschens und des Trennens mindestens einmal wiederholt werden, bevorzugt mindestens zweimal.
20. Verfahren nach einer der vorhergehenden Ausführungsformen, wobei nach der Trennung die benutzte Waschlösung einem Schritt der Fällung unterzogen wird, bevorzugt wobei der benutzten Waschlösung bei der Fällung ein Fällmittel zugesetzt wird, besonders bevorzugt wobei das Fällmittel ein Metallsalz umfasst, insbesondere ein Calciumsalz.
21. Verfahren nach Ausführungsform 20, wobei beim Schritt der Fällung ein Überstand und ein Präzipitat anfallen, und der Überstand vom Präzipitat getrennt wird.
22. Verfahren nach Ausführungsform 21, wobei dem Überstand Carbonat-Ionen zugeführt werden um eine behandelte Waschlösung zu erhalten, bevorzugt wobei die Carbonat-Ionen durch Beaufschlagen des Überstandes mit Kohlenstoffdioxid zugeführt werden.
23. Verfahren nach Ausführungsform 21 oder 22, wobei der Überstand vom Präzipitat getrennt wird, bevorzugt durch Filtration, wobei die Trennung des Überstandes vom Präzipitat vor oder nach der Zufuhr der Carbonat-Ionen erfolgen kann, bevorzugt vor der Zufuhr der Carbonat-Ionen.
24. Verfahren nach Ausführungsform 22 oder 23, wobei der pH-Wert der behandelten Waschlösung nach Zufuhr der Carbonat-Ionen eingestellt wird, um regenerierte Waschlösung zu erhalten, bevorzugt durch die Zugabe einer starken Base, besonders bevorzugt durch Zugabe von Natriumhydroxid.
25. Verfahren nach Ausführungsform 24, wobei die regenerierte Waschlösung wiederverwendet wird zum Waschen von anorganisch gebundenem Sand.
26. Verfahren nach einer der vorhergehenden Ausführungsformen, wobei die Trocknung des gewaschenen Sandes Zentrifugation umfasst.
27. Verfahren nach einer der vorhergehenden Ausführungsformen, wobei der anorganisch gebundene Sand vor dem Waschen mechanisch zerkleinert wird.
28. Verfahren nach einer der vorhergehenden Ausführungsformen, wobei der anorganisch gebundene Sand vor dem Waschen einer Kornvereinzelung unterzogen wird, insbesondere einer mechanischen Kornvereinzelung.
29. Verfahren nach einer der vorhergehenden Ausführungsformen, wobei der anorganisch gebundene Sand vor der Kornvereinzelung einer Wässerung unterzogen wird.
30. Verfahren nach Ausführungsform 29, wobei der anorganische gebundene Sand während der Wässerung mechanisch agitiert wird, insbesondere wobei der anorganisch gebundene Sand während der Wässerung kornvereinzelt wird.
31. Verfahren nach Ausführungsform 29 oder 30, wobei dem anorganisch gebunden Sand ein Tensid bei der Wässerung zugegeben wird.
32. Verfahren nach einer der Ausführungsformen 29 bis 31, wobei der anorganische gebundene Sand vor der Wässerung zerkleinert wird, bevorzugt mithilfe eines Brechers oder Knollenzerkleinerers.
33. Verfahren nach einer der vorhergehenden Ausführungsformen, wobei der anorganisch gebundene Sand vor der Wässerung in der Form von Agglomeraten mit einem Maximaldurchmesser vom 10 cm, bevorzugt maximal 7 cm vorliegt.
34. Verfahren nach einer der Ausführungsformen 29 bis 32, wobei die Wässerung für etwa 5 h bis etwa 4 Wochen und/oder wobei die Wässerung bei einer Temperatur zwischen 15 °C bis etwas 40 °C erfolgt.
35. Anlage zur Durchführung des Verfahrens nach einer der vorhergehenden Ausführungsformen.

## Patentansprüche

1. Verfahren zur Rückgewinnung von anorganisch gebundenem Sand, wobei das Verfahren umfasst:
- Waschen des anorganisch gebundenen Sandes mit einer wasserbasierten Waschlösung, wobei die Waschlösung mindestens eine Base mit einem pKs-Wert zwischen 9 und 13 beinhaltet;
- Trennen des gewaschenen Sandes von der benutzten wasserbasierten Waschlösung;
- Trocknen des gewaschenen Sandes.

2. Verfahren nach Anspruch 1, wobei der anorganisch gebundene Sand mit einem anorganischen Bindemittel gebunden ist, wobei das anorganische Bindemittel bevorzugt Silikate umfasst, besonders bevorzugt wobei das Bindemittel Wasserglas, oder ein Geopolymer umfasst, insbesondere bevorzugt Wasserglas.

3. Verfahren nach einem der vorhergehenden Ansprüche, wobei die Waschlösung einen pH-Wert zwischen etwa 8,5 und etwa 12,5, bevorzugt zwischen 9,5 und 11,5 aufweist.

4. Verfahren nach einem der vorhergehenden Ansprüche, wobei die mindestens eine Base eine zweiwertige Base ist, bevorzugt wobei der zweite pKs-Wert der zweiwertigen Base kleiner ist als 9, besonders bevorzugt wobei der zweite pKs-Wert zwischen 6 und 9 liegt.

5. Verfahren nach einem der vorhergehenden Ansprüche, wobei die Waschlösung zwischen etwa 5 mmol/L bis etwa 5000 mmol/L, bevorzugt zwischen etwa 30 mmol/L bis etwa 500 mmol/L und besonders bevorzugt zwischen 70 mmol/L und 150 mmol/L der mindestens einen Base mit einem pKs-Wert zwischen 9 und 13 beinhaltet.

6. Verfahren nach einem der vorhergehenden Ansprüche, wobei der gebundene Sand eine mittlere Korngröße zwischen etwa 20 µm bis etwa 2000 µm, bevorzugt zwischen etwa 50 µm bis etwa 1000 µm, besonders bevorzugt zwischen etwa 60 µm bis etwa 700 µm hat.

7. Verfahren nach einem der vorhergehenden Ansprüche, wobei der anorganische gebundene Sand zwischen 1 Gew.-% bis etwa 10 Gew.-%, bevorzugt zwischen etwa 2 Gew.-% bis etwa 5 Gew.-% anorganischen Binders umfasst, relativ zur Gesamtmasse des anorganisch gebundenen Sandes.

8. Verfahren nach einem der vorhergehenden Ansprüche, wobei die Waschlösung zwischen etwa 0.1 Gew.-% bis etwa 5 Gew.-%, bevorzugt zwischen 0.5 Gew.-% bis etwas 2 Gew.-% eines Tensides umfasst, relativ zur Gesamtmasse der Waschlösung.

9. Verfahren nach einem der vorhergehenden Ansprüche, wobei beim Schritt des Waschens der anorganische gebundene Sand und die Waschlösung eine Suspension bilden, insbesondere wobei in der Suspension das Gewichtsverhältnis zwischen dem anorganisch gebundenen Sand und der Waschlösung zwischen etwa 1:2 bis etwa 5:1, bevorzugt zwischen etwa 1:1 bis etwa 2,5:1 beträgt.

10. Verfahren nach Anspruch 9, wobei die Temperatur der Waschlösung und/oder der Suspension zwischen etwa 10°C bis etwa 90 °C, bevorzugt zwischen etwa 40 °C bis etwa 80 °C, insbesondere bevorzugt zwischen 60 °C bis etwa 70 °C beträgt.

11. Verfahren nach einem der vorhergehenden Ansprüche, wobei die Dauer des Waschschrittes zwischen etwa 5 Minuten bis etwa 120 Minuten, bevorzugt zwischen etwa 10 Minuten bis etwa 90 Minuten und besonders bevorzugt zwischen etwa 20 Minuten und 60 Minuten beträgt.

12. Verfahren nach einem der vorhergehenden Ansprüche, wobei nach der Trennung die benutzte Waschlösung einem Schritt der Fällung unterzogen wird, bevorzugt wobei der benutzten Waschlösung bei der Fällung ein Fällmittel zugesetzt wird, besonders bevorzugt wobei das Fällmittel ein Metallsalz umfasst, insbesondere ein Calciumsalz.

13. Verfahren nach Anspruch 12, wobei beim Schritt der Fällung ein Überstand und ein Präzipitat anfallen, und der Überstand vom Präzipitat getrennt wird, insbesondere wobei dem Überstand Carbonat-Ionen zugeführt werden um eine behandelte Waschlösung zu erhalten, bevorzugt wobei die Carbonat-Ionen durch Beaufschlagen des Überstandes mit Kohlenstoffdioxid zugeführt werden

14. Verfahren nach Anspruch 13, wobei der pH-Wert der behandelten Waschlösung nach Zufuhr der Carbonat-Ionen eingestellt wird um regenerierte Waschlösung zu erhalten, bevorzugt durch die Zugabe einer starken Base, besonders bevorzugt durch Zugabe von Natriumhydroxid.

15. Anlage zur Durchführung des Verfahrens nach einem der vorhergehenden Ansprüche.
